# EUROPÄISCHE PATENTSCHRIFT

(11) **EP 3 862 596 B1**
(45) Veröffentlichungstag und Bekanntmachung des Hinweises auf die Patenterteilung: **08.05.2024**
(21) Anmeldenummer: 21153666.9
(22) Anmeldetag: 27.01.2021
(51) Int. Cl.: F16F 15/073

(54) **GERÄTE- UND ANTI-SCHOCKLAGER UND GERÄTE- UND ANTI-SCHOCKLAGERANORDNUNG**
DEVICE AND ANTI-LOCK BEARING AND DEVICE AND ANTI-LOCK BEARING ARRANGEMENT
PALIER D'APPAREIL ET ANTI CHOC ET DISPOSITIF DE PALIER D'APPAREIL ET ANTI-CHOC

(30) Priorität: 10.02.2020 DE 102020201618
(43) Veröffentlichungstag der Anmeldung: 11.08.2021
(73) Patentinhaber: Willbrandt KG, 22525 Hamburg (DE)
(72) Erfinder: SCHMIED, Jürgen, 21244 Buchholz i.d. Nordheide (DE)
(74) Vertreter: Müller Verweyen

(56) Entgegenhaltungen:
- JP-A- 2007 205 449
- US-A- 2 938 700
- US-A1- 2014 234 100

## Beschreibung

Die vorliegende Erfindung betrifft ein Geräte- und Anti-Schocklager mit den Merkmalen des Oberbegriffs von Anspruch 1 und eine Geräte- und Anti-Schocklageranordnung mit den Merkmalen des Oberbegriffs von Anspruch 14.

Geräte- und Anti-Schocklager schützen insbesondere elektronische Geräte, Aggregate und Anlagen vor Stoßbelastungen eines beweglichen Fundamentes. Im Umkehrschluss wird auch das Fundament durch das Geräte- und Anti-Schocklager vor den Schwingungen und Stößen des Gerätes, des Aggregates oder der Anlage geschützt. Das Geräte- und Anti-Schocklager dient praktisch einer Entkopplung des Gerätes, des Aggregates oder der Anlage von dem Fundament. Solche Geräte- und Anti-Schocklager werden insbesondere im Schiffbau, im Transportwesen oder auch in der Industrie zur Lagerung von Geräten, Aggregaten und Anlagen mit einer großen Masse verwendet und sind dazu eingerichtet in allen Achsen statische und dynamische Lasten aufzunehmen. Ein besonderes Problem stellt dabei die Lagerung von Geräten auf Marineschiffen dar, welche z.B. durch Minendetonationen, Granatangriffe oder dergleichen besonders starken Belastungen ausgesetzt sind, welche z.B. zu einem schockartigen Anheben oder seitlichen Ausweichen des Marineschiffes führen können. Die durch das schockartige Anheben oder Ausweichen des Marineschiffes erzeugten, auf die Geräte einwirkenden Belastungen müssen durch eine entsprechende Auslegung der Gerätelager begrenzt werden, wozu die Geräte- und Anti-Schocklager einen entsprechenden Federweg des Schiffes zu dem Gerät bzw. umgekehrt ermöglichen müssen.

Ein derartiges Lager ist z.B. aus dem britischen Patent GB 1,057,750 bekannt. Dieses in der Figur 1 gezeigte Lager 1 ist als ein geschlossenes Oval aus einem Federwerkstoff, wie z.B. einem Elastomer oder einem Blech oder einer Kombination aus einem Elastomer mit einem oder mehreren Blechen, mit zwei an den Flachseiten vorgesehenen Befestigungsabschnitten 4 und 5 ausgebildet. Die Befestigungsabschnitte 4 und 5 sind zwischen zwei halbkreisförmigen Federabschnitten 2 und 3 angeordnet, welche bei einer Belastung durch entsprechende Federbewegungen die Vibrationen und Stöße zwischen dem Schiff und dem Gerät kompensieren und dadurch die von dem Schiff auf das Gerät und umgekehrt übertragbaren Lasteinwirkungen reduzieren.

Ein derartiges Lager ist ebenfalls aus die US 2014/234100 A1, die als nächstliegender Stand der Technik betrachtet wird, bekannt.

Die Federcharakteristik des Lagers 1 ist von den Werkstoffkenndaten, von der Bemessung und von den Radien der einfedernden Federabschnitte 2 und 3 abhängig. Die Befestigungsabschnitte 4 und 5 hingegen sind durch jeweils zwei Befestigungsplatten 9,11 und 8,10, z.B. Metallplatten, bewusst zu flachen, formstabilen Abschnitten versteift und leisten keinen oder nur einen sehr geringen Beitrag zu der Federcharakteristik des Lagers 1.

Dabei ist die Federkennlinie in dem Kraft/Wegverhältnis und dem maximalen Einfederweg hier insbesondere von der Form also von der Größe der Radien der Federabschnitte 2 und 3 abhängig. Sofern größere Einfederwege realisiert werden sollen, müssen die Radien der Federabschnitte 2 und 3 entsprechend größer gewählt werden, wodurch zusätzlich die Außenabmessungen des Lagers 1 vergrößert werden, da durch den vergrößerten Radius nicht nur die Höhe des Lagers 1, sondern zusätzlich auch die Breite des Lagers 1 vergrößert wird.

Aus der DIN 95408 sind ferner dort als Stauchbügel-Federelemente bezeichnete Geräte- und Anti-Schocklager bekannt, welche U-förmig mit einem Krümmungsabschnitt und zwei gegenüberliegenden Befestigungsansätzen ausgebildet sind. Bei diesen Lagern ist die Größe des Federweges von dem Radius des Krümmungsabschnittes abhängig, so dass ein größerer Federweg nur durch eine entsprechend größere Bemessung des Radius des Krümmungsabschnittes realisiert werden kann. Durch diesen grö-ßeren Radius werden aber gleichzeitig die Außenabmaße und der damit verbundene Bauraumbedarf des Lagers vergrößert. Sofern dieser erforderliche Bauraum nicht vorhanden ist, können solche Lager folglich auch nur für begrenzte Federwege ausgelegt werden. Ferner soll das Geräte- und Anti-Schocklager möglichst so ausgelegt werden können, dass auch die Einwirkung von grö-ßeren Kräften nur möglichst kleinere Federwege des Lagers zur Folge haben, ohne dass dabei die übertragenen Kräfte vergrö-ßert werden.

Vor diesem Hintergrund liegt der Erfindung die Aufgabe zugrunde, ein kompaktes Geräte- und Anti-Schocklager bereitzustellen, welches hinsichtlich einer einzuhaltenden Federcharakteristik vereinfacht auszulegen sein soll und überdies bei gro-ßen Krafteinwirkungen möglichst kleine Federbewegungen ausführen soll, ohne dass dies eine vergrößerte Kraftübertragung zur Folge hat.

Zur Lösung der Aufgabe wird erfindungsgemäß ein Geräte- und Anti-Schocklager mit den Merkmalen von Anspruch 1 und eine Geräte- und Anti-Schocklageranordnung nach Anspruch 14 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass der Federabschnitt durch zwei in Reihe angeordnete, gegensätzlich gekrümmte Teilfederabschnitte gebildet ist. Durch die beiden in Reihe angeordneten Teilfederabschnitte wird der maximal mögliche Einfederweg vergrößert. Da die Teilfederabschnitte gegensätzlich gekrümmt sind, können dabei gleichzeitig die maximalen seitlichen Abmessungen gegenüber dem bisher verwendeten Lager mit einem Federabschnitt mit einer einfachen Krümmung verringert werden. Dabei führt jeder Teilfederabschnitt eine eigene Einfederbewegung aus, welche sich aufgrund der Reihenanordnung der Teilfederabschnitte zu der Gesamteinfederbewegung des Geräte- und Anti-Schocklagers ergänzen. Ferner kann die Federsteifigkeit des Lagers durch die gegensätzliche Krümmung der Teilfederabschnitte grundsätzlich bei gleichem Werkstoff und gleichen Abmessungen bis zu einer bestimmten Krafteinwirkung und dem Beginn einer plastischen Verformung erhöht werden, so dass die Einfederwege des Lagers für eine bestimmte Krafteinwirkung in dem elastischen Bereich des Lagers reduziert werden können.

Bevorzugt können die Teilfederabschnitte unterschiedliche Radien aufweisen, so dass die Federcharakteristik zusätzlich neben den Werkstoffkenndaten und den Bemessungen durch einen neuen Parameter, nämlich der Bemessung der Radien und deren Verhältnisse ausgelegt werden kann, welcher vorher nicht zur Verfügung stand. Insbesondere können die Teilfederabschnitte dadurch unterschiedliche Steifigkeiten aufweisen, wodurch bewusst eine Reihenfolge der Verformung der Teilfederabschnitte vorgegeben werden kann. Ferner können durch die unterschiedlichen Radien gleichzeitig unterschiedliche Verformungswege der Teilfederabschnitte mit oder ohne einer zeitlichen und mechanischen Überlappung der Federbewegungen vorgegeben werden.

Dabei kann der Radius von einem der Teilfederabschnitte bevorzugt um einen Faktor von 1,1 bis 3,0 größer sein als der Radius des jeweils anderen Teilfederabschnittes.

Weiter wird vorgeschlagen, dass die Teilfederabschnitte tangential in die Befestigungsabschnitte übergehen. Die Teilfederabschnitte gehen damit ohne einen Knick in die Befestigungsabschnitte über, wodurch möglichst niedrige lokale Maximalspannungen und ein möglichst hoher Materialausnutzungsgrad in dem Lager erreicht werden kann.

Weiter wird vorgeschlagen, dass die Befestigungsabschnitte parallel zueinander ausgerichtet sind. Durch die parallele Ausrichtung der Befestigungsabschnitte kann das Geräte- und Anti-Schocklager zwischen einem ebenen Fundament und einem demgegenüber zu lagernden Gerät mit einer zu dem Fundament parallel ausgerichteten Grundfläche angeordnet werden.

Ferner wird vorgeschlagen, dass die Teilfederabschnitte an ihren miteinander verbundenen Enden tangential ineinander übergehen. Die Teilfederabschnitte gehen damit knickfrei also in einem homogenen Verlauf ineinander über, so möglichst niedrige maximale lokale Spannungen bei einer möglichst gleichmäßige Spannungsverteilung und einem hohen Materialausnutzungsgrad in dem Übergang der Teilfederabschnitte erzielt werden können.

Weiter wird vorgeschlagen, dass die Teilfederabschnitte jeweils durch einen Teilkreisbogenabschnitt mit einem Winkel von größer als 100 Grad und kleiner als 170 Grad gebildet sind. Der Vorteil dieser Lösung ist darin zu sehen, dass die Teilfederabschnitte bewusst keine vollständigen Halbkreise sind, so dass sie in ihren Verbindungen bewusst nicht parallel zu den Befestigungsabschnitten ausgerichteten sind, sondern stattdessen in einer Schräge miteinander verbunden sind.

Weiter wird vorgeschlagen, dass die Teilfederabschnitte derart geformt sind, dass die Tangente in dem Verbindungsabschnitt der miteinander verbundenen Enden der Teilfederabschnitte in einem Winkel von 30 bis 60 Grad zu den Ebenen der Befestigungsabschnitte verläuft. Die Teilfederabschnitte stützen sich dadurch in dem Winkel von 30 bis 60 Grad aneinander ab. Dadurch wird es ermöglicht, dass die Teilfederabschnitte möglichst über ihre gesamte Länge an der Federbewegung teilnehmen, indem sie sich über ihre gesamte Länge verformen, so dass eine höherer Materialausnutzungsgrad erreicht werden kann. Der Verbindungsabschnitt entspricht aufgrund der unterschiedlichen Krümmung der Teilfederabschnitte auch dem Bereich des Wechsels der Krümmung ausgehend von dem einem Teilfederabschnitt zu dem anderen Teilfederabschnitt.

Weiter wird vorgeschlagen, dass die Befestigungsabschnitte seitlich zueinander versetzt angeordnet sind. Durch die vorgeschlagene seitlich versetzte Anordnung der Befestigungsabschnitte kann die Montage erleichtert werden. Dabei können sie insbesondere seitlich soweit zueinander versetzt angeordnet sein, dass sie sich in der orthogonalen Projektion auf ihre Befestigungsflächen nicht mehr überlappen.

Weiter wird vorgeschlagen, dass die beiden Teilfederabschnitte eine identische Dicke und Breite aufweisen. Damit haben die Teilfederabschnitte bei einem identischen Werkstoff grundsätzlich identische Federeigenschaften, und die individuelle Federcharakteristik des Geräte- und Anti-Schocklagers wird erst durch die gegensätzliche, vorzugsweise unterschiedliche Krümmung der Teilfederabschnitte erreicht. Ferner können die beiden Teilfederabschnitte dadurch einstückig ausgebildet und erst in einem Formgebungsprozess für die vorgegebene Federcharakteristik ausgebildet werden. Dies kann z.B. dadurch verwirklicht sein, indem das Geräte- und Anti-Schocklager aus einer entsprechend dicken Metallplatte hergestellt ist.

Dabei können auch die Befestigungsabschnitte eine der Dicke und der Breite der Teilfederabschnitte entsprechenden Dicke und Breite aufweisen. Die Befestigungsabschnitte sind praktisch durch die Endabschnitte des Geräte- und Anti-Schocklagers gebildet, in welche die Teilfederabschnitte mit ihren Enden übergehen.

Ferner können die Teilfederabschnitte und die Befestigungsabschnitte aus einem identischen Werkstoff gebildet sein, so dass das Geräte- und Anti-Schocklager im Idealfall aus einem einzigen Teil gebildet ist, welches insgesamt über seine gesamte Längserstreckung dieselben Werkstoffeigenschaften aufweist.

Weiter wird vorgeschlagen, dass zwischen wenigstens einem der Teilfederabschnitte und einem der Befestigungsabschnitte ein nicht gekrümmter Zwischenabschnitt vorgesehen ist, welcher in einem Winkel von 90 Grad zu dem angrenzendem Befestigungsabschnitt angeordnet ist. Die von dem Befestigungsabschnitt ausgeübte Druckkraft wird damit zuerst in einem Winkel von 90 Grad umgelenkt, bevor sie in die Teilfederabschnitte eingeleitet wird. Oder anders ausgedrückt, der Befestigungsabschnitt stützt sich in einem Winkel von 90 Grad über den nicht gekrümmten Zwischenabschnitt an einem der Teilfederabschnitte ab. Der Zwischenabschnitt ist dabei bewusst nicht gekrümmt, so dass er hinsichtlich der zu übertragenden Druckkraft eine maximale Steifigkeit aufweist. Aufgrund der fehlenden Krümmung werden in dem Zwischenabschnitt möglichst ausschließlich Druckkräfte übertragen und Druckspannungen erzeugt, welche in dem Werkstoff zu erheblich geringeren Verformungen führen als dies bei einer Biegebeanspruchung der Fall wäre.

Weiter wird zur Lösung der Aufgabe eine Geräte- und Anti-Schocklageranordnung zur Lagerung eines Gerätes gegenüber einem Fundament vorgeschlagen, bei der wenigstens zwei Geräte- und Anti-Schocklager nach einem der Ansprüche 1 bis 13 vorgesehen sind, und die Geräte- und Anti-Schocklager gegenüberliegend und symmetrisch zu einer zwischen den Geräte- und Anti-Schocklagern angeordneten Mittenebene angeordnet sind. Die vorgeschlagene Anordnung ist insofern von Vorteil, da sich die zur Lagerung des Gerätes aufzunehmenden Lagerkräfte dadurch symmetrisch in dem Lagerpunkt auf die beiden Geräte- und Anti-Schocklager aufteilen und gegenseitig stützen. Insgesamt kann dadurch eine stabile kompakte Lagerung mit einem sehr großen Federweg in Bezug zu einer Krafteinwirkung in Richtung der Mittenebene realisiert werden.

Dabei kann das Geräte- und Anti-Schocklager bevorzugt nach Anspruch 2 oder nach einem der Ansprüche 3 bis 12 in Rückbeziehung auf Anspruch 2 ausgebildet sein, wobei das Geräte- und Anti-Schocklager in diesem Fall derart angeordnet ist, dass der Teilfederabschnitt mit dem kleineren Radius dem Befestigungsabschnitt zugeordnet ist, an dem das zu lagernde Gerät befestigt ist, und der Teilfederabschnitt mit dem größeren Radius dem Befestigungsabschnitt zugeordnet ist, mit dem das Geräte- und Anti-Schocklager an dem Fundament befestigt ist.

Der Teilfederabschnitt mit dem größeren Radius weist bei einer identischen Dicke und einem identischen Werkstoff eine geringere Steifigkeit als der Teilfederabschnitt mit dem kleineren Radius auf. Damit bildet der Teilfederabschnitt mit dem größeren Radius, welcher dem Fundament zugeordnet ist, den Abschnitt, welcher bei einer Krafteinwirkung zuerst einfedert, während der Teilfederabschnitt, der dem zu lagernden Gerät zugeordnet ist, zunächst unverformt bleibt und damit in dieser Phase eine formstabile Lagerung bzw. Unterstützung für das Gerät bildet.

Weiter wird vorgeschlagen, dass das Geräte- und Anti-Schocklager zwischen einem der Befestigungsabschnitte und einem der Teilfederabschnitte einen nicht gekrümmten Zwischenabschnitt aufweist, und dass der nicht gekrümmte Zwischenabschnitt zwischen dem mit dem Gerät befestigten Befestigungsabschnitt und einem der Teilfederabschnitte angeordnet ist. Der nicht gekrümmte Zwischenabschnitt bewirkt grundsätzlich eine zusätzliche Versteifung des Geräte- und Anti-Schocklagers. Diese zusätzliche Versteifung wird durch die vorgeschlagene Anordnung gezielt zur Versteifung des Bereiches des Lagers genutzt, der in der Befestigungsstellung dem Befestigungsabschnitt zugeordnet ist, an dem das Gerät befestigt ist, so dass das Lager dadurch eine weiter formstabilisierte Unterstützung für das Gerät bildet. Ferner wird durch den Zwischenabschnitt ein zusätzlicher Abstand zwischen dem an dem Gerät befestigten Befestigungsabschnitt und dem Teilfederabschnitt geschaffen, durch welchen sichergestellt werden kann, dass das Lager die volle Einfederbewegung unter Ausnutzung der Elastizität der Teilfederabschnitte ausführen kann, ohne dass die Federbewegung durch eine frühzeitige Anlage des Teilfederabschnittes an dem Gerät begrenzt wird.

Die vorgeschlagene Anordnung des Geräte- und Anti-Schocklagers mit den Teilfederabschnitten in der vorgeschlagenen Zuordnung des Teilfederabschnittes mit dem kleineren Radius ist auch dann von Vorteil, wenn nur ein einziges Geräte- und Anti-Schocklager vorgesehen ist, da sich dadurch Vorteile für die Federbewegung ergeben. Dasselbe gilt auch für die vorgeschlagene Anordnung des Zwischenabschnittes.

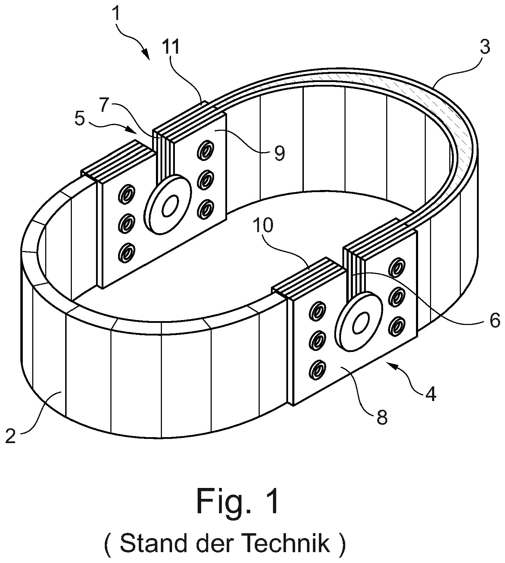

Die Erfindung wird im Folgenden anhand bevorzugter Ausführungsformen unter Bezugnahme auf die beigefügten Figuren erläutert. Dabei zeigt
- Fig. 1: ein aus dem Stand der Technik bekanntes Geräte- und Anti-Schocklager;
- Fig. 2: ein erfindungsgemäßes Geräte- und Anti-Schocklager nach einer ersten Ausführungsform;
- Fig. 3: eine erfindungsgemäße Geräte- und Anti-Schocklageranordnung in perspektivischer Ansicht;
- Fig. 4: eine erfindungsgemäße Geräte- und Anti-Schocklageranordnung in Sicht von oben;
- Fig. 5: eine Federkennlinie eines erfindungsgemäßen Geräte- und Anti-Schocklagers;
- Fig. 6: verschiedene Geräte- und Anti-Schocklager nach der ersten Ausführungsform mit unterschiedlichen Bemessungen; und
- Fig. 7: ein Geräte- und Anti-Schocklager nach einer zweiten Ausführungsform.

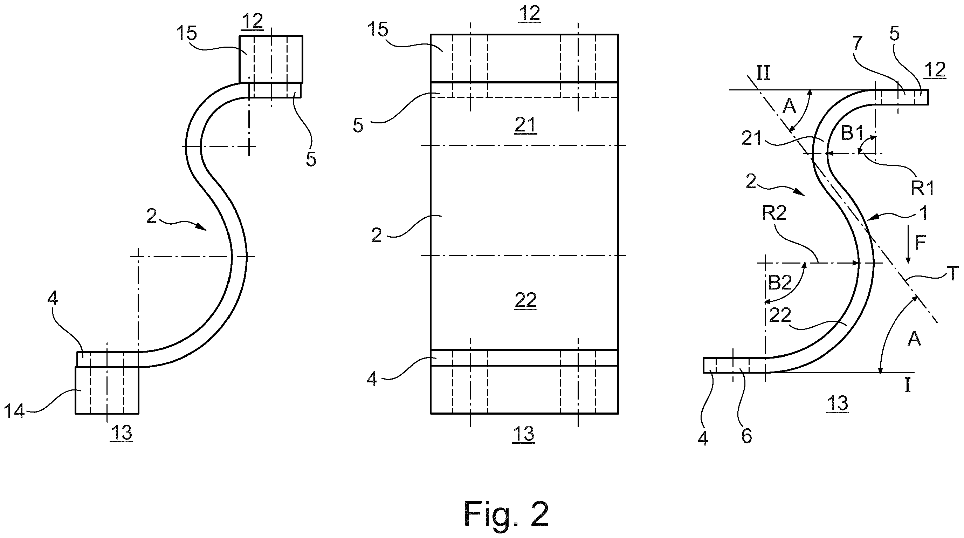

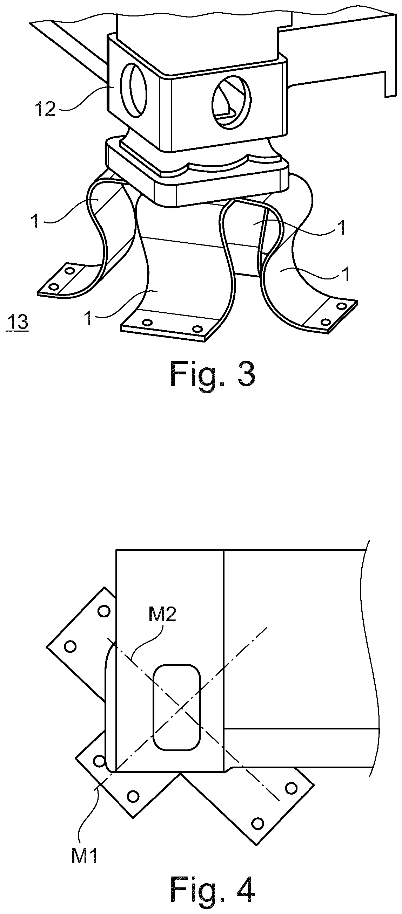

In der Figur 2 ist ein erfindungsgemäßes Geräte- und Anti-Schocklager zu erkennen, welches zur Lagerung von sehr schweren Geräten 12 wie z.B. Containern, Aggregaten, Waffensystemen, und dergleichen vorzugsweise auf Schiffen verwendet wird. Dabei weisen die Geräte 12 Massen von mehreren 100 Kilo bis zu 100 Tonnen auf. Ferner sollen Federwege von 50 bis 150 mm möglich sein, wodurch von dem Schiff also dem Fundament 13 oder auch von dem Gerät 12 ausgehende Stöße kompensiert werden können. Das Geräte- und Anti-Schocklager ist so ausgelegt, dass es eine statische Tragfähigkeit von bis zu 50 kN aufweist. Dabei ist das Gerät 12 bevorzugt durch eine Geräte- und Anti-Schocklageranordnung nach den Figuren 3 oder 4 mit mehreren Geräte- und Anti-Schocklagern gelagert, so dass die Lagerung in der Summe eine statische Tragfähigkeit von mehreren 100 kN aufweisen kann. Insgesamt handelt es sich bei der Geräte- und Anti-Schocklageranordnung um eine Schwerlastlagerung, welche durch ihre Auslegung insbesondere zur Lagerung von Geräten auf Schiffen vorgesehen ist. Die Geräte- und Anti-Schocklager können aber auch zur Lagerung von Geräten 12 auf Fahrzeugen oder auch auf einem festen Untergrund verwendet werden.

Das Geräte- und Anti-Schocklager wird trotz seiner Besonderheit in der Verwendung, Formgebung und Bemessung nachfolgend einfach als Lager 1 bezeichnet. Das Lager 1 ist durch einen mehrfach umgebogenen Metallstreifen mit einer über die Längserstreckung konstanten Dicke von 2 bis 20 mm und konstanten Breite z.B. von 120 mm gebildet.

Das Lager 1 umfasst zwei Befestigungsabschnitte 4 und 5 mit jeweils einer oder mehreren Befestigungsöffnungen 6 und 7. Die Befestigungsabschnitte 4 und 5 sind so geformt und ausgerichtet, dass sie ebene und parallel zueinander ausgerichtete Befestigungsflächen bilden, was in der Figur 2 durch die Ebenen I und II zu erkennen ist. Das Lager 1 weist ferner einen zwischen den Befestigungsabschnitten 4 und 5 angeordneten S-förmigen Federabschnitt 2 auf, der durch zwei entgegengesetzt gekrümmte Teilfederabschnitte 21 und 22 gebildet ist.

Die Teilfederabschnitte 21 und 22 verlaufen ausgehend von den Befestigungsabschnitten 4 und 5 aus einer parallelen Ausrichtung zueinander jeweils in einem entgegengesetzt gekrümmten Kreisbogenabschnitt mit einem Winkel B1 und B2 von 100 bis 170 bevorzugt von 115 bis 125 Grad und gehen in einer Tangente T tangential also ohne einen Knick ineinander über. Ferner weisen die Teilfederabschnitte 21 und 22 unterschiedliche Radien R1 und R2 auf, wodurch sich in den Teilfederabschnitten 21 und 22 unterschiedliche Steifigkeiten bzw. Formwiderstände ergeben. Dabei weist der obere Teilfederabschnitt 21, welcher dem oberen Befestigungsabschnitt 5 zugeordnet ist, an dem das Gerät 12 befestigt ist, einen kleineren Radius R1 und damit eine höhere Steifigkeit auf als der untere Teilfederabschnitt 22 mit dem größeren Radius R2, der dem unteren, mit dem Fundament 13 verbundenen Befestigungsabschnitt 4 zugeordnet ist. Ferner sind die Befestigungsabschnitte 4 und 5 seitlich versetzt zueinander angeordnet, d.h. sie überlappen sich nicht in Richtung der Befestigungsrichtung an dem Gerät 12 und dem Fundament 13. Dabei überragt der obere Befestigungsabschnitt 5 seitlich den unteren Befestigungsabschnitt 4 und zusätzlich den unteren Teilfederabschnitt 22, so dass die Befestigungsöffnungen 7 in dem oberen Befestigungsabschnitt 5 zum Einführen von Schrauben von der Unterseite her frei zugänglich sind. In gleicher Weise ist der untere Befestigungsabschnitt 6 seitlich soweit versetzt, dass er den oberen Befestigungsabschnitt 5 und den oberen Teilfederabschnitt 21 seitlich überragt und die darin vorgesehenen Befestigungsöffnungen 6 von oben frei zugänglich sind. Alternativ kann das Lager 1 auch über eine Schweiß- oder Nietverbindung der Befestigungsabschnitte 4 und 5 mit dem Gerät 12 bzw. dem Fundament 13 verbunden werden.

Da die Teilfederabschnitte 21 und 22 bewusst durch Kreisbogenabschnitte mit jeweils einem Winkel B1 und B2 von 100 bis 170 Grad gebildet sind und in jeweils parallel zueinander ausgerichtete Befestigungsabschnitte 4 und 5 übergehen, sind sie in den einander zugewandten Enden in einer Tangente T miteinander verbunden, welche in einem Winkel A von 30 bis 60 Grad zu den Ebenen I und II der Befestigungsflächen der Befestigungsabschnitte 4 und 5 verläuft. Die beschriebene Geometrie gilt für den unbelasteten und unverformten Zustand des Lagers 1.

Dadurch ergeben sich mehrere Vorteile. Erstens wird durch die vorgeschlagene Bemessung der Teilfederabschnitte 21 und 22 der seitliche Versatz der Befestigungsabschnitte 4 und 5 bei einer gleichzeitig parallelen Ausrichtung der Befestigungsabschnitte 4 und 5 ermöglicht, da die Teilfederabschnitte 21 und 22 ausgehend von der parallelen Ausrichtung ihrer äußeren Enden in einem Abschnitt miteinander verbunden sind, indem sie bewusst noch nicht wieder in einer parallelen Ausrichtung zu den Befestigungsabschnitten 4 und 5 ausgerichtet sind. Der seitliche Versatz der Befestigungsabschnitte 4 und 5 wird ferner durch die Bemessung der Teilfederabschnitte 21 und 22 mit unterschiedlichen Radien R1 und R2 verwirklicht, indem der Befestigungsabschnitt 4, der dem Teilfederabschnitt 22 mit dem größeren Radius R2 zugeordnet ist, seitlich über die Krümmung des anderen Teilfederabschnittes 21 mit dem kleineren Radius R1 hinausragt.

Ein weiterer wichtiger Vorteil der vorgeschlagenen Formgebung des Federabschnittes 2 mit den Teilfederabschnitten 21 und 22 ergibt sich in einer verbesserten Federcharakteristik und Materialausnutzung des Federabschnittes 2 bei der Federbewegung, da der Federabschnitt 2 bei einer Federbewegung in Pfeilrichtung F über seine gesamte Länge verformt wird, ohne dass sich dabei ausgeprägte Spannungssprünge in dem Material ausbilden. Dies gilt insbesondere bis zu der Stellung des Federabschnittes 2, in der die Befestigungsabschnitte 4 und 5 soweit aufeinander zu bewegt sind, dass die Tangente T in der Verbindung der beiden Teilfederabschnitte 21 und 22 parallel zu den Befestigungsflächen der Befestigungsabschnitte 4 und 5 also zu den Ebenen I und II in der Figur 2 verläuft.

Da die Teilfederabschnitte 21 und 22 entgegengesetzt gekrümmt sind, kann ein vergleichsweiser großer Federweg bei einer gleichzeitig kompakten Ausführung des Lagers 1 realisiert werden. Die Teilfederabschnitte 21 und 22 werden bei einer Federbewegung in Pfeilrichtung F praktisch zu einem kompakten Paket aufeinander gefaltet, ohne dass sich die Teilfederabschnitte 21 und 22 die Außenabmaße des Lagers 1 auch in dem verformten Zustand vergrößern. Ferner werden durch die Bemessung der Radien R1 und R2 sowie der Winkel B1 und B2 der Kreisbogenabschnitte zusätzliche, bisher nicht zur Verfügung gestandene Auslegungsparameter geschaffen, durch welche die Federcharakteristik noch genauer an eine vorgegebene Federcharakteristik angepasst werden kann.

Ferner können bevorzugt Distanzstücke 14 und 15 vorgesehen sein, durch welche in der Befestigungsstellung des Lagers 1 jeweils ein Abstand zwischen dem Fundament 13 und dem zugeordneten Befestigungsabschnitt 4 und zwischen dem Gerät 12 und dem zugeordneten Befestigungsabschnitt 5 geschaffen wird. Diese Distanzstücke 14 und 15 haben den Vorteil, dass sich die Teilfederabschnitte 21 und 22 über die Ebenen I und II hinaus verformen können, wodurch der Federweg des Lagers 1 weiter vergrößert bzw. nicht durch eine frühzeitige Anlage der Teilfederabschnitte 21 und 22 an dem Fundament 13 bzw. dem Gerät 12 begrenzt wird.

In den Figuren 3 und 4 ist eine erfindungsgemäße Geräte- und Anti-Schocklageranordnung mit mehreren erfindungsgemäßen Lagern 1 zur Lagerung eines Gerätes 12 in Form eines Containers auf einem Fundament 13 z.B. einem Schiffsdeck zu erkennen. Die Lager 1 sind jeweils mit dem unteren Befestigungsabschnitt 4 mit dem Fundament 13 und mit dem oberen Befestigungsabschnitt 5 mit dem Gerät 12 also z.B. dem Container befestigt, so dass der Federabschnitt 2 eine elastische Verbindung zwischen dem Gerät 12 und dem Fundament 13 bildet. Die Lager 1 sind jeweils paarweise in Bezug zu einer Mittenebene M1 und M2 symmetrisch zueinander angeordnet und bilden damit eine symmetrische Abstützung für den Container. Ferner sind die Lager 1 so angeordnet, dass jeweils die Teilfederabschnitte 21 mit den kleineren Radien R1, also der höheren Steifigkeit, dem Container zugeordnet sind und damit für diesen eine formstabilere Abstützung bilden. Die Teilfederabschnitte 22 mit den größeren Radien R2 sind dem an dem Fundament 13 befestigten Befestigungsabschnitt 4 zugeordnet und bilden die Unterstützung für die oberen Teilfederabschnitte 21 mit den größeren Steifigkeiten. Damit werden bei einer Belastung der Lager 1 zuerst die unteren Teilfederabschnitte 22 mit den größeren Radien R2 und den kleineren Steifigkeiten verformt, bis die zur Verformung der unteren Teilfederabschnitte 22 erforderliche Kraft soweit angestiegen ist, dass auch die oberen Teilfederabschnitte 21 mit den größeren Steifigkeiten verformt werden. Die Verformung der Teilfederabschnitte 21 und 22 erfolgt damit sukzessive und kann sich zusätzlich zeitlich und mechanisch überlappen.

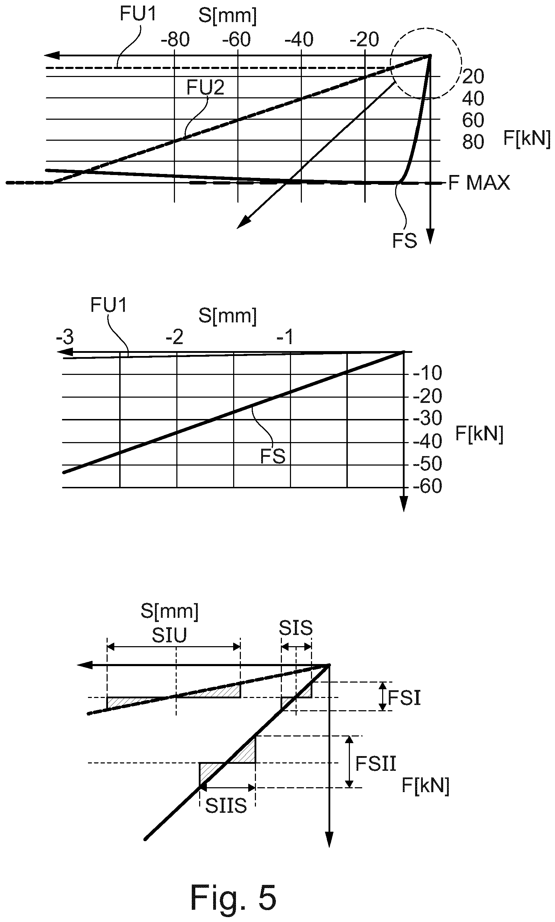

In der Figur 5 sind die Federcharakteristik FS eines erfindungsgemäßen Lagers 1 mit einem S-förmigen Federabschnitt 2 und die Federcharakteristiken FU1 und FU2 eines Lagers 1 mit jeweils einem U-förmigen Federabschnitt 2 nach dem Stand der Technik zu erkennen, wobei die Federcharakteristiken FS, FU1 und FU2 allein für eine Druckbelastung dargestellt sind. In der oberen Darstellung ist die Federcharakteristik für den gesamten Federweg dargestellt, während in der mittleren Darstellung nur die Federcharakteristik bis zu einem Federweg von 3 mm vergrößert dargestellt ist.

Wie deutlich zu erkennen ist, weist die Federcharakteristik FU1 des U-förmigen Lagers 1 nach dem Stand der Technik für eine Druckbelastung bis zu ca. 5kN zunächst eine etwas steiler abfallende Federkennlinie bis zu einem elastischen Verformungsweg von 10 mm auf, welche dann bei einer weiter ansteigenden Druckbelastung in eine wesentlich horizontaler also nur noch leicht abfallende Federkennlinie bis zu einer Verformung von 120 mm und mehr übergeht. Die Federcharakteristik FS des erfindungsgemäßen Lagers 1 weist dagegen bis zu einer Druckbelastung von ca. 120 kN eine sehr steil abfallende Federkennlinie bis zu einem Einfederweg von ca. 10 mm bei einer maximalen Druckkraft FMAX auf, bis der Werkstoff plastisch verformt wird und die Federkennlinie schließlich anschließend horizontal oder sogar leicht ansteigend bis zu einem Verformungsweg von 120 mm verläuft. Dabei nimmt die dazu erforderliche Druckbelastung aufgrund der frühzeitiger einsetzenden plastischen Verformung sogar leicht ab.

Wichtig ist dabei insbesondere der in der mittleren Darstellung zu erkennende Unterschied der Federcharakteristiken FU1 und FS im Bereich der Verformung bis zu 3 mm. Das erfindungsgemäße Lager 1 führt diesen Verformungsweg erst bei einer Krafteinwirkung von ca. 55 kN aus, während das Lager 1 nach dem Stand der Technik diesen bereits bei einer ausgeübten Druckkraft von ca. 5 kN ausführt. Diese erhöhte Steifigkeit des Lagers 1 ist auf die Formgebung der Teilfederabschnitte 21 und 22 mit den entgegengesetzt gerichteten Krümmungen zurückzuführen.

Diese unterschiedlichen Federcharakteristiken FU1 und FS haben zur Folge, dass dieselbe Kraftveränderung der Druckkraft FSI bei dem erfindungsgemäßen Lager 1 einen deutlich kleineren Federweg SIS als bei dem Lager 1 nach dem Stand der Technik zu Folge hat, was anhand des größeren Federweges SIU zu erkennen ist. Selbst bei sehr viel größeren Druckkräften bzw. Drucckraftgradienten FSII weist das erfindungsgemäße Lager 1 immer noch einen vergleichsweisen geringen Federweg SIIS auf.

Selbstverständlich ist es möglich, auch ein Lager 1 nach dem Stand der Technik steifer auszulegen, was aber aufgrund des einfach gekrümmten Federabschnittes 2 nur zu einer etwas steileren Federcharakteristik FU2 führen würde. Eine Federcharakteristik FS mit dem ausgeprägten Steilabfall und der anschließenden plastischen Verformung bei gleichbleibender bzw. leicht abnehmender Druckkraft, wie es das erfindungsgemäße Lager 1 aufweist, kann durch ein Lager 1 nach dem Stand der Technik mit einem einfachen U-förmigen Federabschnitt 2 unabhängig von der Bemessung nicht verwirklicht werden.

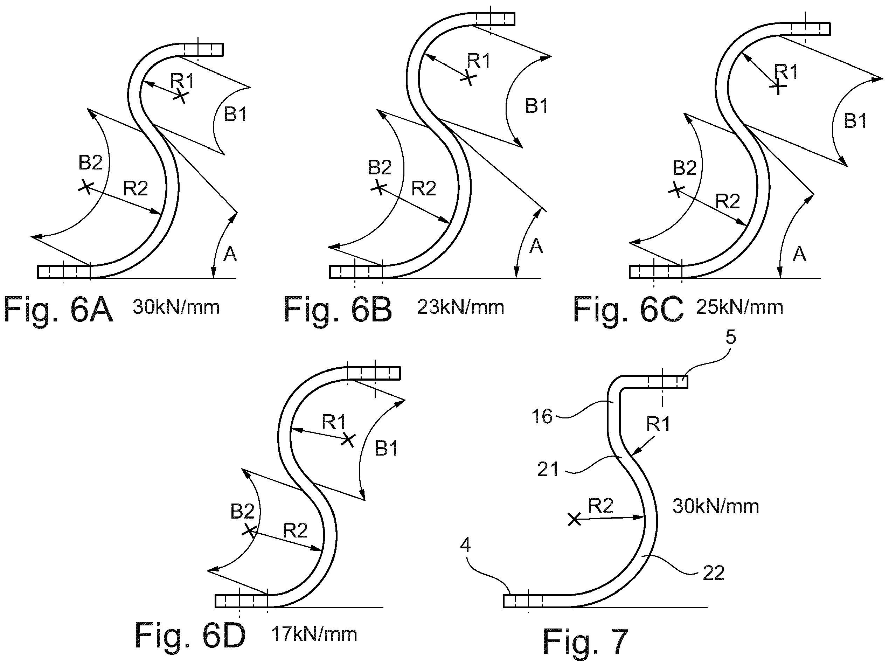

In der Fig. 6 ist das erfindungsgemäße Lager 1 mit verschiedenen Radien R1 und R2 und Winkeln B1 und B2 der Teilfederabschnitte 21 und 22 zu erkennen.

In dem ganz rechten Ausführungsbeispiel ist das Lager 1 mit den Teilfederabschnitten 21 und 22 mit identischen Radien R1 und R2 von 45 mm und Winkeln B1 und B2 von ca. 110 Grad bemessen und weist eine Federsteifigkeit von 17 kN/mm auf. Die Teilfederabschnitte 21 und 22 weisen damit auch jeweils eine identische Federsteifigkeit auf, welche sich zu der Federsteifigkeit von 17 kN/mm ergänzen. In den drei links daneben befindlichen Ausführungsbeispielen weist der obere Teilfederabschnitt 21 jeweils einen kleineren Radius R1 und einen kleineren Winkel B1 und der jeweils untere Teilfederabschnitt 22 einen größeren Radius R2 und einen größeren Winkel B2 als die Teilfederabschnitte 21 und 22 des rechten Ausführungsbeispiels auf. Die oberen Teilfederabschnitte 21 wurden jeweils in ihren Radien R1 verkleinert und die unteren Teilfederabschnitte 22 wurden in ihren Radien R2 vergrößert, so dass sich insgesamt ungefähr identische Bauhöhen zu dem rechten Ausführungsbeispiel ergeben. Die weiteren Abmessungen wie Materialstärke und Breite sowie der Werkstoff sind bei allen Ausführungsbeispielen identisch. Durch die kleineren Radien R1 weisen die oberen Teilfederabschnitte 21 eine vergrößere Federsteifigkeit auf, während die unteren Teilfederabschnitte 22 aufgrund der vergrößerten Radien R2 eine verkleinerte Federsteifigkeit aufweisen. Insgesamt wird die Federsteifigkeit des Lagers 1 hier allein durch die unterschiedliche Bemessung der Krümmungen der Teilfederabschnitte 21 und 22 auf einen Wert von 23 kN/mm bis zu 30 kN/mm erhöht, wie nachfolgend noch näher erläutert wird.

In den beiden mittleren Ausführungsbeispielen weisen die oberen Teilfederabschnitte 21 jeweils einen Radius R1 von 40 mm und die unteren Teilfederabschnitte 22 einen Radius R2 von 60 mm auf. Die beiden Ausführungsbeispiele unterscheiden sich darin, dass die Teilfederabschnitte 21 und 22 in dem zweiten Ausführungsbeispiel von links jeweils einen größeren Winkel B1 und B2 von ca. 98 Grad und 146 Grad aufweisen, während die Teilfederabschnitte 21 und 22 in dem dritten Ausführungsbeispiel von links einen Winkel B1 und B2 von 93 Grad und 140 Grad aufweisen. Dadurch gehen die Teilfederabschnitte 21 und 22 in dem dritten Ausführungsbeispiel von links in einer Tangente T mit einem Winkel A von 46 Grad ineinander über, während die Teilfederabschnitte 21 und 22 in dem zweiten Ausführungsbeispiel von links in einer etwas flacheren Tangente T in einem Winkel von A gleich 40 Grad ineinander übergehen. Diese Vergrößerung der Winkel B1 und B2 hat zu Folge, dass die Kräfte in einem etwas flacheren Winkel A von einem der Teilabschnitte 21 oder 22 auf den jeweils anderen Teilabschnitt 21 oder 22 übertragen werden und die Federsteifigkeit in diesem Fall von 25 kN/mm auf 23 kN/mm reduziert wird. Das Lager 1 kann damit durch eine Reduzierung der Winkel B1 und B2 und eine damit verbundene Vergrößerung des Winkels A der Tangente T bei ansonsten gleichen Kenndaten versteift werden.

In dem ganz linken Ausführungsbeispiel wurde der untere Teilfederabschnitt 22 identisch zu dem unteren Teilfederabschnitt 22 des dritten Ausführungsbeispiels von links mit R2 gleich 60 mm und B2 gleich 140 Grad bemessen, während der obere Teilfederabschnitt 21 mit einem kleineren Radius von R1 gleich 30 mm und einem Winkel von B1 gleich 70 Grad bemessen wurde. Die Winkel B1 und B2 bzw. die Radien R1 und R2 sind so zueinander bemessen, dass die Tangente T ebenfalls in einem Winkel A von 46 Grad ausgerichtet ist. Das Lager 1 in dem ganz linken Ausführungsbeispiel weist durch den kleineren Radius R1 und Winkel B1 in dem oberen Teilfederabschnitt 21 insgesamt eine höhere Federsteifigkeit von 30 kN/mm auf, wobei die Erhöhung der Federsteifigkeit von 25 kN/mm auf 30 kN/mm allein auf die unterschiedliche Bemessung des oberen Teilfederabschnittes 21 bei ansonsten gleichen Daten des Lagers 1 zurückzuführen ist.

Wie oben beschrieben wird die höhere Federsteifigkeit des Lagers 1 insbesondere durch die Bemessung des oberen Teilfederabschnittes 21 mit dem kleineren Radius R1 und dem kleineren Winkel B1 erreicht, welcher dadurch selbst eine höhere Steifigkeit aufweist.

Das Lager 1 ist gemäß der vorgeschlagenen Geräte- und Anti-Schocklageranordnung so angeordnet, dass der Teilfederabschnitt 21 mit dem kleineren Radius R1 also der höheren Federsteifigkeit zwischen dem mit dem Gerät 12 befestigten Befestigungsabschnitt 5 und dem Teilfederabschnitt 22 mit dem größeren Radius R2 angeordnet ist. Dadurch wird das Gerät 12 von dem Teilfederabschnitt 21 mit dem kleineren Radius R1 also der größeren Federsteifigkeit unterstützt und findet darin eine formstabile Unterstützung, so dass sich die Geometrie des Lagers 1 im Bereich der Befestigung des Gerätes 12 zumindest in einer Anfangsphase der Belastung bei geringeren Druckkräften nur möglichst gering und dann auch aufgrund der zweitversetzten Verformung der Teilfederabschnitte 21 und 22 erst während einer Spätphase der Einfederbewqegung ändert. Dadurch kann verhindert werden, dass sich das Lager 1 bereits in einer Frühphase der Einfederbewegung in dem Teilfederabschnitt 21 verformt, welcher dem an dem Gerät 12 befestigten Befestigungsabschnitt 5 zugeordnet ist, wodurch wiederum verhindert wird, dass die Kontaktfläche zwischen dem Befestigungsabschnittes 5 und dem Gerät 12 vergrößert wird, bzw. dass sich das Lager 1 mit dem Teilfederabschnitt 21 an dem Gerät 12 anlegt.

In der Figur 7 ist eine weitere bevorzugte Ausführungsform des Lagers 1 zu erkennen, bei dem der obere Teilfederabschnitt 21 mit dem kleineren Radius R1 einen Radius von 30 mm und der untere Teilfederabschnitt 22 mit dem größeren Radius R2 einen Radius von 60 mm aufweist. Zusätzlich ist zwischen dem mit dem Gerät 12 zu befestigenden Befestigungsabschnitt 4 und dem oberen Teilfederabschnitt 21 mit dem kleineren Radius R1 ein nicht gekrümmter, also gerader Zwischenabschnitt 16 vorgesehen, welcher in einem Winkel von 90 Grad zu dem Befestigungsabschnitt 5 angeordnet ist, an dem das Gerät 12 befestigt wird. Der mit dem Gerät 12 zu befestigende Befestigungsabschnitt 5 stützt sich damit über den Zwischenabschnitt 16 in einem Winkel von 90 Grad auf dem oberen Teilfederabschnitt 21 ab. Dadurch werden im Belastungsfall des Lagers 1 ausschließlich vertikale Druckkräfte über den Zwischenabschnitt 16 in den oberen Teilfederabschnitt 21 eingeleitet, wobei das Lager 1 auch in dem Zwischenabschnitt 16 selbst aufgrund der dort fehlenden Krümmung ausschließlich Druckkräften ausgesetzt ist. Derselbe Effekt würde sich ergeben, wenn der Zwischenabschnitt 16 zwischen dem unteren Teilfederabschnitt 22 mit dem größeren Radius R2 und dem mit dem Fundament 13 zu befestigenden Befestigungsabschnitt 4 angeordnet wäre.

Ein weiterer Vorteil in der vorgeschlagenen Anordnung des Zwischenabschnittes 16 ist darin zu sehen, dass dadurch ein Abstand zwischen dem zugeordneten oberen Teilfederabschnitt 21 und dem an dem Gerät 12 zu befestigenden Befestigungsabschnitt 5 geschaffen wird. Dadurch kann sichergestellt werden, dass sowohl der zugeordnete obere Teilfederabschnitt 21 als auch der untere Teilfederabschnitt 22 die Federbewegungen vollständig ausführen können und nicht vorzeitig zur Anlage an dem Gerät 12 gelangen und die Federbewegung selbst begrenzen.

Als Werkstoffe für das Lager 1 können bevorzugt Baustähle der Bezeichnung S235 mit einer Zugfestigkeit von Rm = 350 bis 470 N/mm² und einer Bruchdehnung von mehr als 15 % oder alternativ auch Baustähle der Bezeichnung S275 mit einer Zugfestigkeit von Rm = 410 bis 560 N/mm² und einer Bruchdehnung von größer als 20 % verwendet werden.

Die genannten Werkstoffe haben den Vorteil, dass sie aufgrund ihrer Werkstoffeigenschaften es ermöglichen, durch die vorgeschlagene Geometrie und Bemessung des Lagers 1 das gewünschte Federverhalten zu erreichen. Ferner haben die Werkstoffe den Vorteil einer einfachen Bearbeitbarkeit und Umformbarkeit, so dass das Lager 1 in der vorgeschlagenen Geometrie kostengünstig hergestellt werden kann.

## Patentansprüche

1. Geräte- und Anti-Schocklager mit
- wenigstens zwei Befestigungsabschnitten (4,5) und
- wenigstens einem zwischen zwei Befestigungsabschnitten (4,5) angeordnetem Federabschnitt (2), wobei
- der Federabschnitt (2) durch zwei in Reihe angeordnete, gegensätzlich gekrümmte Teilfederabschnitte (21,22) gebildet ist, wobei
- die Befestigungsabschnitte (4,5) parallel zueinander ausgerichtet sind,
- die Teilfederabschnitte (21,22) unterschiedliche Radien (R1,R2) aufweisen,
**dadurch gekennzeichnet, dass**
- der Radius (R1,R2) von einem der Teilfederabschnitte (21,22) um einen Faktor von 1,1 bis 3,0 größer ist als der Radius (R1,R2) des jeweils anderen Teilfederabschnittes (21,22), und
- die Teilfederabschnitte (21,22) jeweils durch einen Kreisbogenabschnitt mit einem Winkel (B1,B2) von größer als 100 Grad und kleiner als 170 Grad gebildet sind..

2. Geräte- und Anti-Schocklager nach Anspruch 1, **dadurch gekennzeichnet, dass**
- die Teilfederabschnitte (21,22) und die Befestigungsabschnitte (4,5) tangential ineinander übergehen.

3. Geräte- und Anti-Schocklager nach einem der vorangegangenen Ansprüche, **dadurch gekennzeichnet, dass**
- die Teilfederabschnitte (21,22) an ihren miteinander verbundenen Enden tangential ineinander übergehen.

4. Geräte- und Anti-Schocklager nach einem der vorangegangenen Ansprüche, **dadurch gekennzeichnet, dass**
- die Teilfederabschnitte (21,22) derart geformt sind, dass die Tangente (T) der miteinander verbundenen Enden der Teilfederabschnitte (21,22) in einem Winkel (A) von 30 bis 60 Grad zu den Ebenen der Befestigungsabschnitte (4,5) verläuft.

5. Geräte- und Anti-Schocklager nach einem der vorangegangenen Ansprüche, **dadurch gekennzeichnet, dass**
- die Befestigungsabschnitte (4,5) seitlich zueinander versetzt angeordnet sind.

6. Geräte- und Anti-Schocklager nach einem der vorangegangenen Ansprüche, **dadurch gekennzeichnet, dass**
- die beiden Teilfederabschnitte (21,22) eine identische Dicke und Breite aufweisen.

7. Geräte- und Anti-Schocklager nach Anspruch 6, **dadurch gekennzeichnet, dass**
- die Befestigungsabschnitte (4,5) eine der Dicke und der Breite der Teilfederabschnitte (21,22) entsprechenden Dicke und Breite aufweisen.

8. Geräte- und Anti-Schocklager nach einem der vorangegangenen Ansprüche, **dadurch gekennzeichnet, dass**
- die Teilfederabschnitte (21,22) und die Befestigungsabschnitte (4,5) aus einem identischen Werkstoff gebildet sind.

9. Geräte- und Anti-Schocklager nach einem der vorangegangenen Ansprüche, **dadurch gekennzeichnet, dass**
- zwischen wenigstens einem der Teilfederabschnitte (21,22) und einem der Befestigungsabschnitte (4,5) ein nicht gekrümmter Zwischenabschnitt (16) vorgesehen ist, welcher in einem Winkel von 90 Grad zu dem angrenzendem Befestigungsabschnitt (4,5) angeordnet ist.

10. Geräte- und Anti-Schocklageranordnung zur Lagerung eines Gerätes (12) gegenüber einem Fundament (13) **dadurch gekennzeichnet, dass**
- wenigstens zwei Geräte- und Anti-Schocklager nach einem der Ansprüche 1 bis 9 vorgesehen sind, und
- die Geräte- und Anti-Schocklager gegenüberliegend und symmetrisch zu einer zwischen den Geräte- und Anti-Schocklagern angeordneten Mittenebene (M1,M2) angeordnet sind, und
- das Geräte- und Anti-Schocklager derart angeordnet ist,
dass der Teilfederabschnitt (21,22) mit dem kleineren Radius (R1,R2) dem Befestigungsabschnitt (4,5) zugeordnet ist, an dem das zu lagernde Gerät (13) befestigt ist, und der Teilfederabschnitt (21,22) mit dem größeren Radius (R1,R2) dem Befestigungsabschnitt (4,5) zugeordnet ist, mit dem das Geräte- und Anti-Schocklager an dem Fundament (13) befestigt ist.

11. Geräte- und Anti-Schocklageranordnung nach Anspruch 10 mit einem Geräte- und Anti-Schocklager nach Anspruch 9, **dadurch gekennzeichnet, dass**
- der nicht gekrümmte Zwischenabschnitt (16) zwischen dem mit dem Gerät (12) befestigten Befestigungsabschnitt (5) und einem der Teilfederabschnitte (21,22) angeordnet ist.

## Claims

1. Device and anti-shock bearing with
- at least two attachment sections (4, 5) and
- at least one spring section (2) arranged between two attachment sections (4, 5), wherein
- the spring section (2) is formed by two partial spring sections (21, 22) arranged in series and curved in opposite directions, wherein
- the attachment sections (4, 5) are aligned parallel to one another,
- the partial spring sections (21, 22) comprise different radii (R1, R2),
**characterized in that**
- the radius (R1, R2) of one of the partial spring sections (21, 22) is larger by a factor of 1.1 to 3.0 than the radius (R1, R2) of the respective other partial spring section (21, 22), and
- the partial spring sections (21, 22) are each formed by a circular arc section with an angle (B1, B2) of greater than 100 degrees and less than 170 degrees.

2. Device and anti-shock bearing according to claim 1, **characterized in that**
- the partial spring sections (21, 22) and the attachment sections (4, 5) merge tangentially into one another.

3. Device and anti-shock bearing according to any one of the preceding claims, **characterized in that**
- the partial spring sections (21, 22) merge tangentially into one another at their interconnected ends.

4. Device and anti-shock bearing according to any one of the preceding claims, **characterized in that**
- the partial spring sections (21, 22) are shaped in such a way that the tangent (T) of the interconnected ends of the partial spring sections (21, 22) extends at an angle (A) of 30 to 60 degrees to the planes of the attachment sections (4, 5).

5. Device and anti-shock bearing according to any one of the preceding claims, **characterized in that**
- the attachment sections (4, 5) are arranged laterally offset to each other.

6. Device and anti-shock bearing according to any one of the preceding claims, **characterized in that**
- the two partial spring sections (21, 22) comprise an identical thickness and width.

7. Device and anti-shock bearing according to claim 6, **characterized in that**
- the attachment sections (4, 5) comprise a thickness and width corresponding to the thickness and width of the partial spring sections (21, 22).

8. Device and anti-shock bearing according to any one of the preceding claims, **characterized in that**
- the partial spring sections (21, 22) and the attachment sections (4, 5) are formed from an identical material.

9. Device and anti-shock bearing according to any one of the preceding claims, **characterized in that**
- a non-curved intermediate section (16) is provided between at least one of the partial spring sections (21, 22) and one of the attachment sections (4, 5), which is arranged at an angle of 90 degrees to the adjacent attachment section (4, 5) .

10. Device and anti-shock bearing arrangement for mounting a device (12) relative to a foundation (13), **characterized in that**
- at least two device and anti-shock bearings according to any one of claims 1 to 9 are provided, and
- the device and anti-shock bearings are arranged opposite each other and symmetrically to a center plane (M1, M2) located between the device and anti-shock bearings, and
- the device and anti-shock bearing is arranged in such a way that the partial spring section (21, 22) with the smaller radius (R1, R2) is assigned to the attachment section (4, 5) to which the device (13) to be supported is fastened, and the partial spring section (21, 22) with the larger radius (R1, R2) is assigned to the attachment section (4, 5) with which the device and anti-shock bearing is fastened to the foundation (13).

11. Device and anti-shock bearing arrangement according to claim 10 with a device and anti-shock bearing according to claim 9, **characterized in that**
- the non-curved intermediate section (16) is arranged between the attachment section (5) fastened to the device (12) and one of the partial spring sections (21, 22).

## Revendications

1. Palier d'appareil anti-choc comportant :
- au moins deux portions de fixation (4,5) et
- au moins une portion à ressort (2) disposée entre deux portions de fixation (4,5),
- la portion à ressort (2) étant formée par deux portions à ressort partielles (21, 22) incurvées de manière opposée et disposées en série,
- les portions de fixation (4,5) étant orientées parallèlement l'une à l'autre,
- les portions à ressort partielles (21, 22) ayant différents rayons (R1, R2),
**caractérisé en ce que**
- le rayon (R1, R2) de l'une des portions à ressort partielles (21, 22) est respectivement supérieur au rayon (R1, R2) de l'autre portion à ressort partielle (21, 22) d'un facteur de 1,1 à 3,0, et
- les portions à ressort partielles (21, 22) sont respectivement formées par une portion en arc de cercle avec un angle (B1, B2) supérieur à 100 degrés et inférieur à 170 degrés.

2. Palier d'appareil anti-choc selon la revendication 1, **caractérisé en ce que**
- les portions à ressort partielles (21, 22) et les portions de fixation (4, 5) sont tangentiellement en continuité les unes avec les autres.

3. Palier d'appareil anti-choc selon l'une quelconque des revendications précédentes, **caractérisé en ce que**
- les portions à ressort partielles (21, 22) sont tangentiellement en continuité les unes avec les autres au niveau de leurs extrémités mutuellement reliées.

4. Palier d'appareil anti-choc selon l'une quelconque des revendications précédentes, **caractérisé en ce que**
- les portions à ressort partielles (21, 22) sont formées de telle sorte que la tangente (T) des extrémités mutuellement reliées des portions à ressort partielles (21, 22) s'étend à un angle (A) de 30 à 60 degrés par rapport aux plans des portions de fixation (4, 5).

5. Palier d'appareil anti-choc selon l'une quelconque des revendications précédentes, **caractérisé en ce que**
- les portions de fixation (4, 5) sont disposées latéralement décalées l'une par rapport à l'autre.

6. Palier d'appareil anti-choc selon l'une quelconque des revendications précédentes, **caractérisé en ce que**
- les deux portions à ressort partielles (21, 22) ont une épaisseur et une largeur identiques.

7. Palier d'appareil anti-choc selon la revendication 6, **caractérisé en ce que**
- les portions de fixation (4,5) ont une épaisseur et une largeur correspondant à l'épaisseur et à la largeur des portions à ressort partielles (21, 22).

8. Palier d'appareil anti-choc selon l'une quelconque des revendications précédentes, **caractérisé en ce que**
- les portions à ressort partielles (21, 22) et les portions de fixation (4,5) sont formées à partir d'un matériau identique.

9. Palier d'appareil anti-choc selon l'une quelconque des revendications précédentes, **caractérisé en ce que**
- une portion intermédiaire non incurvée (16) est prévue entre au moins une des portions à ressort partielles (21, 22) et l'une des portions de fixation (4,5), laquelle portion intermédiaire est disposée à un angle de 90 degrés par rapport à la portion de fixation (4, 5) adjacente.

10. Palier d'appareil anti-choc pour le montage d'un appareil (12) par rapport à une fondation (13), **caractérisé en ce que**
- au moins deux paliers d'appareil anti-choc selon l'une des revendications 1 à 9 sont prévus, et
- les paliers d'appareil anti-choc sont disposés en vis-à-vis et symétriquement par rapport à un plan médian (M1, M2) disposé entre les paliers d'appareil anti-choc, et le palier d'appareil anti-choc est disposé de telle sorte que la portion à ressort partielle (21, 22) ayant le plus petit rayon (R1, R2) est associée à la portion de fixation (4, 5) sur laquelle est fixé l'appareil (13) à monter, et la portion à ressort partielle (21, 22) ayant le plus grand rayon (R1, R2) est associée à la portion de fixation (4, 5) avec laquelle le palier d'appareil anti-choc est fixé à la fondation (13).

11. Agencement de palier d'appareil anti-choc selon la revendication 10 comportant un palier d'appareil anti-choc selon la revendication 9, **caractérisé en ce que**
- la portion intermédiaire non incurvée (16) est disposée entre la portion de fixation (5) fixée à l'appareil (12) et l'une des portions à ressort partielles (21, 22).
